# EUROPEAN PATENT APPLICATION

(11) **EP 4 847 717 A1**
(43) Date of publication of application: **02.12.2026**
(21) Application number: 26169372.5
(22) Date of filing: 31.03.2026
(51) Int. Cl.: E04F 13/08

(54) **WALL PANEL INSTALLATION STRUCTURE AND INSTALLATION METHOD THEREOF**

(30) Priority: 09.03.2026 CN 202610280297
(71) Applicant: Nature Green Group (HK) Co., Limited, Hong Kong 999077 (HK)
(72) Inventor: CHAN, Sing, 999077 Hong Kong (HK)
(74) Representative: Plavsa, Olga

(57) **Abstract**

A wall panel installation structure and installation method thereof is disclosed, which wall panel installation structure comprises two or more wall panels, wherein a locking structure is configured on the wall panel and adhesive assemblies disposed on a back surface thereof. The locking structure comprises a protrusion locking strip and a locking groove engaged with the protrusion locking strip. The adhesive assembly comprises a substrate, adhesive disposed on two sides of the substrate, and release papers covering outer sides of the adhesive. Adjacent wall panels are locked with each other through the protrusion locking strip and the locking groove, and the wall panels are attached to a wall surface through the adhesive assembly after removing the release papers. The wall panel installation structure of the present invention can enhance integrity and prevent warping deformation, thereby simplifying on-site construction procedures while ensuring firm adhesion.

## Description

### TECHNICAL FIELD

The present invention relates to the technical field of building decoration materials, in particular to a wall panel installation structure and installation method thereof.

### BACKGROUND

Existing wall panel installation mostly adopts on-site gluing and bonding, which has defects such as low efficiency, poor reliability and insufficient sealing performance. On the one hand, the on-site gluing needs to go through processes of applying adhesive, pressing for fixation and waiting for curing, which is cumbersome and results in long construction period; on the other hand, conventional adhesive is thin and rigid, lacking cushioning and leveling adjustment, and impose strict requirements on the flatness of the wall. When flatness deviation exists on the wall, the wall panel and the wall surface tend to form local point contact, resulting in insufficient effective bonding area and failure to compensate for gaps, which easily causes hollowing, loosening, and even falling off. Besides, the panel seams lack an effective sealing structure, resulting in easy intrusion of moisture into interior and reducing service life of the wall panel and the wall.

Thus, there is an urgent need to provide a wall panel installation structure with quick installation, strong adaptability to the wall, dual cushioning and leveling functions, and excellent waterproof performance.

### SUMMARY

In view of the technical problems existing in the conventional wall panel installation, which mostly adopts on-site gluing and bonding, such as low efficiency, poor reliability and insufficient sealing performance, the technical solution adopted by the present invention to solve the technical problems is:
A wall panel installation structure comprises two or more wall panels, wherein a locking structure is configured on the wall panel and adhesive assemblies disposed on a back surface of the wall panel. The locking structure comprises a protrusion locking strip and a locking groove engaged with the protrusion locking strip. The adhesive assembly comprises a substrate, adhesive disposed on two sides of the substrate, and release papers covering outer sides of the adhesive. Adjacent wall panels are locked with each other through the protrusion locking strip and the locking groove, and the wall panels are attached to a wall through the adhesive assembly after removing the release papers.

Further, sides around periphery of the wall panel are configured with the locking structure, and at least two of the adhesive assemblies are arranged in parallel.

Further, a thickness of the adhesive assembly is 0.5-4mm, which forms a cushion space between the wall panel and the wall surface.

Further, the substrate comprises any one of polyester, polyvinyl chloride, polypropylene, polyethylene, polyurethane, acrylic foam, polyethylene foam, and EVA foam, and the adhesive comprises any one of acrylate adhesive and rubber-based adhesive.

Further, initial adhesion of the adhesive assembly is greater than 22N, and peel strength is greater than 35N. The adhesive assembly is able to withstand a load of 2kg per square inch at 40°C for more than 72 hours, and withstand a load of 3kg per square inch at 25°C for more than 48 hours.

Further, the adhesive assembly comprises a first double-sided tape bonded to the wall surface, a first fastener, a second double-sided tape bonded to the wall panel, and a second fastener bonded to the second double-sided tape.

Further, a thickness of the protrusion locking strip is 1.5-2.5mm, a height of the protrusion locking strip is 3.5-4.5mm, and an end of the protrusion locking strip is configured with an inclined or curved surface.

Further, the locking groove comprises an opening for receiving the protrusion locking strip, a first extension part disposed at a side of the opening, and a second extension part disposed at the other side of the opening, wherein an extension length of the first extension part is great than that of the second extension part; a guide surface is disposed on the second extension part, the protrusion locking strip is configured to abut against the first extension part and/or the second extension part, and then extends into the locking groove.

Further, the protrusion locking strip is configured with a first step located on one side thereof and opposite to the first extension part, a second step located on the other side thereof abutting the second extension part. A thickness of the wall panel is 3-8mm, a thickness of the second step is 1-2mm, and a gap formed between a top of the first step and a bottom of the first extension part, a height of the gap is 0.5-1mm.

Another object of the present invention is to provide an installation method applied to the wall panel installation structure as described above, and comprising the following steps:
S1, cleaning the wall surface, adhering the adhesive assembly to the wall surface and/or the wall panel;
S2, removing all the release papers, attaching the wall panel to the wall surface, pressing the adhesive assembly to contact the wall surface;
S3, engaging adjacent wall panels with each other via the locking structure to realize splicing and overall leveling.

Beneficial effects of the present invention are as follows:
1. The wall panel installation structure of the present invention is provided with the preset adhesive assemblies with release papers on the back surface of the wall panel. The adhesive assemblies achieve reliable bonding, and the locking structure can enhance integrity and prevent warping deformation, thereby simplifying on-site construction procedures while ensuring firm adhesion.
2. The installation procedure of the present invention is convenient and efficient, which eliminates the on-site gluing process, significantly reducing the installation time. The flexible adhesive of the present invention provides a cushion space for compression, which can absorb local height differences of the wall, ensuring fully contact between the adhesive and the wall. The locking structure benefits to level between the wall panels, ensuring overall flatness of the decorative finish. The panel seam of the wall panel forms physical sealing via flat edge locking, thereby preventing moisture invasion and improving sealing performance in panel seam area.

### BRIEF DESCRIPTION OF THE DRAWINGS

Fig. 1 is a schematic view of a first embodiment of the wall panel installation structure according to the present invention.
Fig. 2 is another schematic view of the first embodiment of the wall panel installation structure according to the present invention.
Fig. 3 is a schematic view of a second embodiment of the wall panel installation structure according to the present invention.
Fig. 4 is a schematic view of a third embodiment of the wall panel installation structure according to the present invention.
Fig. 5 is a schematic view and magnified view of the first embodiment of the wall panel installation structure attached to the wall surface according to the present invention.
Fig. 6 is a schematic view of the adhesive assembly of a first embodiment according to the present invention.
Fig. 7 is a schematic view of the adhesive assembly of a second embodiment bonding between the wall surface and the wall panel according to the present invention.

### DETAILED DESCRIPTION OF EMBODIMENTS

The embodiments of the present invention are further illustrated hereafter in combination with the accompany drawings.

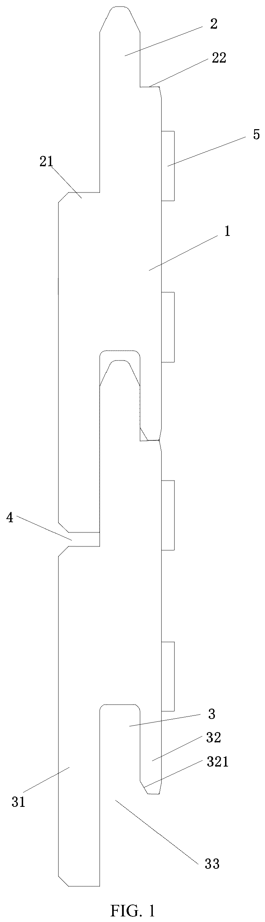

A wall panel installation structure as shown in Fig. 1, Fig. 2 and Fig.6, comprises two or more wall panels 1, wherein a locking structure is configured on the wall panel 1 and adhesive assemblies 5 disposed on a back surface of the wall panel. The locking structure comprises a protrusion locking strip 2 and a locking groove 3 engaged with the protrusion locking strip 2. The adhesive assembly 5 comprises a substrate 51, adhesive 52 disposed on two sides of the substrate 51, and release papers 53 covering outer sides of the adhesive 52. Adjacent wall panels 1 is locked with each other through the protrusion locking strip 2 and the locking groove 3, and the wall panels 1 is attached to a wall surface 100 through the adhesive assembly 5 after removing the release papers 53.

The wall panel mounting structure of the present invention is easy and quick to mount since it eliminates on-site glue preparation and gluing procedure, and allows instant attachment upon peeling, thereby significantly improving construction efficiency. Meanwhile, the adhesive assembly provides cushioning, reduces the requirement for flatness of the wall surface, achieves stress relief, and exhibits high adaptability. Furthermore, the synergistic effect of the mechanical locking and chemical bonding enhances the integrity of the wall panel and prevents deformation, thereby improving structural stability. Moreover, the physical locking structure prolongs the water vapor penetration path, enhances waterproofing and moisture resistance, and features excellent sealing performance.

The wall panel installation structure of the present invention is provided with the preset adhesive assemblies with release papers on the back surface of the wall panel, simplifying on-site construction procedures. During installation, there is no need to perform adhesive mixing and application. The wall panel is attached to the wall surface upon removing the release papers, and the locking between adjacent wall panels are formed via the engagement of the protrusion locking strip and the locking groove, reducing on-site wet operation and shortening installation time of a single wall panel.

Meanwhile, the mechanical engagement of the protrusion locking strip and the locking groove, forms mechanical locking structure, limiting relative displacement of the wall panel during curing process of the adhesive, together with the bonding of the adhesive assembly on the back, together with the bonding of the adhesive assembly on the back, reducing the risk of wall panel loosening or falling off.

Moreover, the locking structure forms an engaged state at the joint between the adjacent wall panels, prolonging the penetration path within the panel seam and, together with the back adhesive assembly, improving the sealing performance of the seam area. The preset adhesive assembly helps to control the thickness and the distribution uniformity of the adhesive, avoiding the problem of hollowing or adhesive failure resulting from uneven on-site gluing, improving the consistency of installation quality.

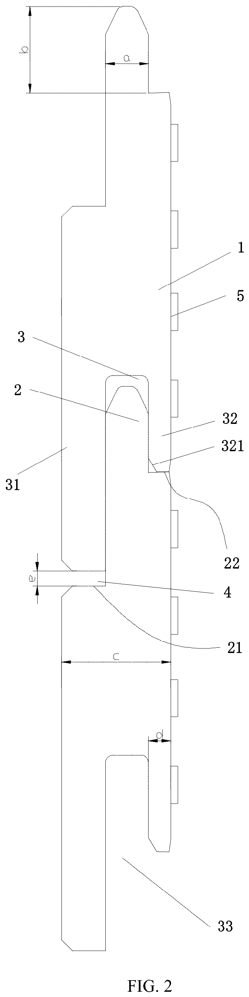

The wall panel installation structure as shown in Fig. 1 and Fig. 2, sides around the periphery of the wall panel 1 are configured with the locking structure, and at least two of the adhesive assemblies are arranged in parallel.

Specifically, by configuring the locking structure on sides around the periphery, the wall panel installation structure of the present invention enables the single wall panel to form mechanical engagement with the adjacent panels in multiple directions, limiting the relative displacement within the installation plane, reducing panel edge misalignment caused by local flatness deviation of the wall or shrinkage of the adhesive, thereby improving the uniformity of the seam width at the joint between adjacent wall panels.

Meanwhile, the continuous engagement formed by the periphery locking structure prolongs the penetration path of the panel seam, together with sealing function of the back adhesive assembly, reducing the possibility of the moisture intrusion into the interior of the wall from the joint area.

In this case, at least two of the adhesive assemblies are arranged in parallel, allowing multiple-area distribution within the bonding area between the wall panel and the wall surface, which is beneficial to disperse the stress generated by self-weight of the wall panel and external loads, thereby reducing the risk of interface peeling in a single bonding area caused by local stress concentration.

Moreover, the parallel adhesive assemblies provide multiple supporting reference points for the wall panel during installation, which helps the operator to control the installation posture of the wall panel, thereby reducing panel deflection caused by insufficient initial adhesion during pressing and fitting, and improving the wall flatness after large-area installation.

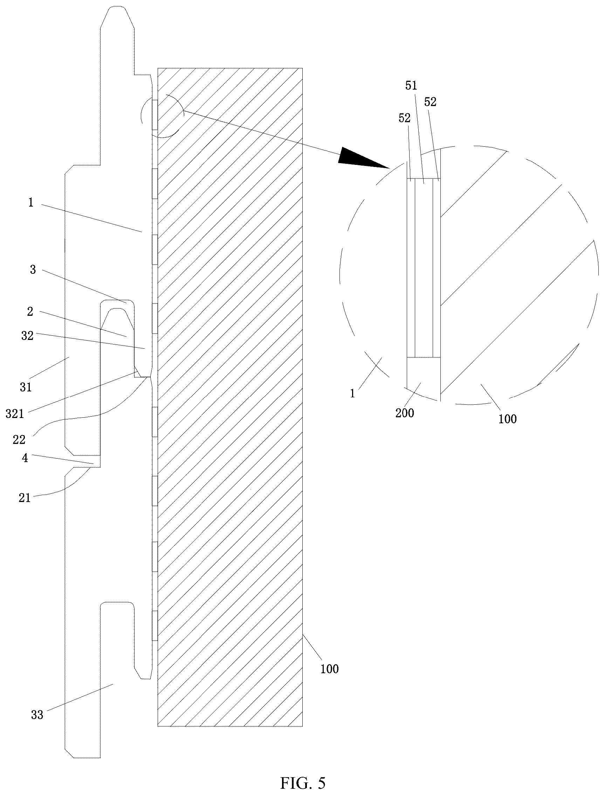

Further, as shown in Fig. 5, a thickness of the adhesive assembly is 0.5-4mm, which forms a cushion space 200 between the wall panel 1 and the wall surface 100.

Specifically, after removing the release papers, the adhesive assembly is configured to have a thickness of 0.5-4mm, which forms a cushion space between the wall panel and the wall surface, and facilitates overall leveling when the locking structures are engaged with each other. When the local flatness deviations exist in the wall surface, the adhesive assembly within such thickness range deforms to fill the gaps, ensuring effective contact area between the back of the wall panel and adhesive assembly, reducing risk of hollowing caused by insufficient contact.

Meanwhile, the cushion space can absorb displacement stress caused by changes in environmental temperature or minor wall settlement, and further reduce direct transmission of stress to the wall panel surface, thereby minimizing the risk of cracking of the wall panel or peeling at the adhesive interface.

Moreover, the certain thickness of the adhesive provides allowance for adhesive to flow and deform, facilitating infiltration of the adhesive into micro-pores on the wall surface and enhancing bonding stability at the adhesive interface. The thickness further benefits to form physical barrier and mitigate moisture penetration and sound transmission.

Optionally, in some embodiments, the thickness of the adhesive assembly may be selected from 0.5mm to 4mm, which is not limited to 1mm, 2mm, 3mm, 4mm. The thickness of 0.5mm is suitable for application in which the wall surface is highly flat. The thickness of the adhesive assembly is considered as the sum of that of the substrate and those of the two adhesives.

Further, the substrate 51 comprises any one of polyester, polyvinyl chloride, polypropylene, polyethylene, polyurethane, acrylic foam, polyethylene foam, and EVA foam. The adhesive 52 comprises any one of acrylate adhesive and rubber-based adhesive.

Specifically, adhesive assembly adopts a layer structure formed by the substrate, adhesive disposed on two sides of the substrate, and release papers covering outer sides of the adhesive. The release paper prevents contamination of dust and moisture to the adhesive interface, ensuring performance consistency of the adhesive before installation, reducing risk of local bonding failure due to the contamination of the adhesive surface, maintaining shape stability of the adhesive assembly during storage and transportation, and realizing the quick exposure of the adhesive interface upon removing the release paper during installation.

Optionally, film substrates such as polyester and polyvinyl chloride may provide tensile resistance support for the adhesive, which helps to maintain dimensional stability of the adhesive assembly during installation. Foam substrates with compression resilience such as acrylic foam and EVA foam may cooperate with thickness of the adhesive assembly to accommodate micro-unevenness of the wall surface, improving effective bonding area.

Optionally, the adhesive is selected from acrylate adhesive or rubber-based adhesive, wherein the acrylate adhesive has excellent resistance to temperature variations and aging, and the rubber-based adhesive usually exhibits high initial adhesion. Either may be selected according to actual application environment and installation requirements, so as to balance initial positioning and long-term bonding reliability.

Further, the initial adhesion of the adhesive assembly is greater than 22N, and peel strength is greater than 35N. The adhesive assembly is able to withstand a load of 2kg per square inch at 40°C for more than 72 hours, and withstand a load of 3kg per square inch at 25°C for more than 48 hours.

Specifically, the initial adhesion of the adhesive assembly over 22N benefits to obtain enough initial fixing force upon the wall panel is attached to the wall surface, thereby reducing risk of slipping or displacement caused by the self-weight of the wall panel before the adhesive is fully cured, and facilitating position adjustment and fixation during installation.

Specifically, the peel strength over 35N benefits to enhance the bonding strength at the surface between the adhesive assembly, the wall panel, and the wall surface, thereby reducing the possibility of edge warping or debonding caused by surface stress concentration, improving long-term reliability of the bonding.

Specifically, holding performance of withstanding a load of 2kg per square inch at 40°C for more than 72 hours and withstanding a load of 3kg per square inch at 25°C for more than 48 hours, benefits to ensure that the adhesive assembly does not undergo excessive plastic deformation or failure under the high temperature or long-term self-weight of the wall panel, so as to adapt to different climatic conditions and long-term service requirements.

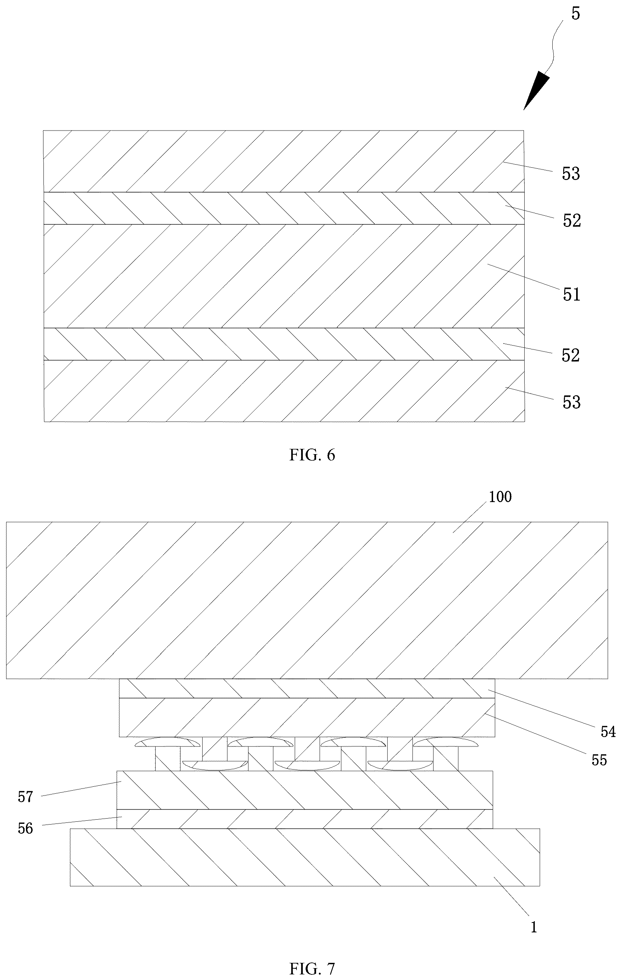

Further, as shown in Fig.7, the adhesive assembly 5 comprises a first double-sided tape 54 bonded to the wall surface 100 a first fastener 55, a second double-sided tape 56 bonded to the wall panel 1, and a second fastener 57 bonded to the second double-sided tape 56.

Specifically, the adhesive assembly adopts a structure of the first double-sided tape bonded with the first fastener and the second double-sided tape bonded with the second fastener, forming a combined connection of chemical adhesion and mechanical interlocking between the wall panel and the wall surface. Mushroom hook fastener achieves mechanical connection through the interlock of head structure thereof, and is characterized by reclosability, which may achieve separation of the fasteners by applying a peeling force when the single panel needs to be replaced or the interior of the wall requires maintenance. This helps to realize non-destructive disassembly and reduce risk of damage to the wall panel and the wall during later maintenance.

The double-sided tape cooperates with the mushroom hook fastener, wherein the double-sided tape provides continuous interface bonding for maintaining air tightness and initial positioning, and the mushroom hook fastener provides mechanical anchorage fixation for enhancing shear and peel resistance. The cooperation benefits to disperse stress generated by external loads and reduce the possibility of overall loosening caused by local failure of a single connection. Moreover, mechanical resistance variation during fastening of the mushroom hook fastener, may provide proper installation feedback for the operator, and cooperation with the initial adhesion of the double-sided tape, facilitate position control of the wall panel during the pressing and fitting process, thereby reducing panel displacement caused by insufficient initial adhesion or operational deviation.

In this case, assembly formed by a combination of the double-sided tape and the mushroom hook fastener has a certain thickness which cooperates with the cushion space to absorb microscopic flatness deviation of the wall surface, and the assembly exerts a certain dissipation effect on vibration energy via elastic contact of the fastener structure.

Specifically, when the wall panel with the mushroom hook fasteners needs to be detached, the engagement between the first fastener and the second fastener may be pried open vertically by using a removal card, and the wall panel then be peeled off the wall surface. If necessary, press one end of the first fastener or the first double-sided tape, and slowly pull the other end away from the wall, thereby removing the first fastener or the first double-sided tape from the wall surface.

Specifically, the first fastener and the second fastener is a reclosable mechanical fastener. Optionally, the first fastener and the second fastener is a hook-and-loop fastener structure or mushroom hook structure.

Compared with presetting an adhesive assembly with release paper on the back surface of a wall panel, the first fastener, the second fastener, the first double-sided tape and the second double-sided tape that are separately and independently disposed in the present embodiment enable an operator to conveniently arrange the layout of the adhesive assemblies according to site conditions.

The wall panel installation structure as shown in Fig. 1 and Fig.2, wherein a thickness *a* of the protrusion locking strip 2 is 1.5-2.5mm, a height b of the protrusion locking strip 2 is 3.5-4.5mm, and an end of the protrusion locking strip 2 is configured with an inclined or curved surface.

As shown in Fig.2, the thickness a of protrusion locking strip 2 is 1.5-2.5mm, and the height b is 3.5-4.5mm, which benefits to ensure that the protrusion locking strip exhibits sufficient cross-sectional strength and reduces risk of warping deformation or breakage during installation loading or long-term use, thereby maintaining mechanical stability of the locking structure. The end of the protrusion locking strip configured as an inclined or curved structure provides guiding function during splicing of the adjacent wall panels, which benefits to adjust minor alignment deviation, reduce resistance during insertion of the protrusion locking strip into the locking groove, and minimize edge and corner damage caused by rigid collision. The protrusion locking strip and locking groove are engaged within such size range, which helps to form a tight joint interface, to reduce gaps at the panel seams, and to exert a positive effect on improving sealing performance of the engagement. Moreover, the height of the protrusion locking strip is designed to cooperate with the thickness of the adhesive assembly, so that the locking structure still maintains an effective engagement depth when the wall panel is adjusted to adapt to the flatness deviation of the wall, thereby reducing risk of locking failure caused by wall surface undulation.

The wall panel installation structure as shown in Fig. 1 and Fig. 2, the locking groove comprises an opening 33 for receiving the protrusion locking strip 2, a first extension part 31 disposed at a side of the opening 33, and a second extension part 32 disposed at the other side of the opening 33, wherein an extension length of the first extension part 31 is great than that of the second extension part 32; a guide surface 321 is disposed on the second extension part 32, the protrusion locking strip 2 is configured to abut against the first extension part 31 and/or the second extension part 32, and then extends into the locking groove 3.

Specifically, in an asymmetrical structure of the first extension part and the second extension part, the longer first extension part forms a relatively large overlapping area with the protrusion locking strip under the locking state, which helps to disperse load applied at the seam and to reduce risk of deformation caused by local stress concentration. The guide surface of the second extension part may guide the protrusion locking strip to slide into the locking groove during splicing of the wall panels, and in cooperation with the limiting function of the first extension part, facilitating adjustment of minor alignment deviation during installation and reducing locking resistance. Moreover, the engagement of the protrusion locking strip extending into the extension part upon abutting it, allows the wall panel to perform preliminary alignment at an angle and then achieve locking. This design provides certain adaptability for installation in confined spaces or edge regions. The length difference between the first extension part and the second extension part also forms a directional engagement feature, which helps operator to identify the installation direction and reduces improper engagement due to reverse installation.

Optionally, in some embodiments, the second extension part 32 is positioned close to the wall surface 100, and the protrusion locking strip 2 first abuts against the first extension part 31 from bottom to top, then moves upward along the first extension part 31; under the alignment cooperation of the second extension part 32, the protrusion locking strip 2 extends into the locking groove 3.

Optionally, in some embodiments, the first extension part 31 is positioned close to the wall surface 100, when the protrusion locking strip 2 obliquely extends into the locking groove 3, the protrusion locking strip 2 in guiding engagement with the guide surface 321, then the protrusion locking strip 2 is angularly adjusted to extend into the locking groove 3.

Optionally, in some embodiments, the first extension part 31 is positioned close to the wall surface 100, when the protrusion locking strip 2 obliquely extends into the locking groove 3, the protrusion locking strip 2 in guiding engagement with the guide surface 321, the protrusion locking strip 2 further tilts to extend into abutment with the first extension part 31, and then is angularly adjusted to extend into the locking groove 3.

The wall panel installation structure as shown in Fig. 1 and Fig.2, the protrusion locking strip 2 is configured with a first step 21 located on one side thereof and opposite to the first extension part 31, a second step 22 located on the other side thereof abutting the second extension part 32. A thickness c of the wall panel 1 is 3-8mm, a thickness d of the second step 22 is 1-2mm, and a gap 4 formed between a top of the first step 21 and a bottom of the first extension part 31, a height *e* of the gap 4 is 0.5-1mm.

As shown in Fig. 2, the abutting engagement between the second step and the second extension part is beneficial to determine the relative positions of the wall panels upon installation, and in cooperation with the 3-8mm thickness c of the wall panel, proving structural rigidity to the connection and reducing risk of deformation under compression.

Specifically, the wall panel is one of a rigid stone plastic composite panel (rigid SPC panel), plywood, density board, and wood plastic composite panel (WPC panel). Specifically, composite material such as rigid SPC panel and WPC panel exhibits good dimensional stability, high strength, impact resistance, and waterproof sealing, which can reduce post-installation deformation caused by changes in moisture content and help maintain fitting accuracy of the locking structure. The plywood and density board are easy to cut on site, and with the inclined or curved guiding design at the end of the protrusion locking strip of the present invention, the installation difficulty at special-shaped positions can be reduced.

As shown in Fig. 2, the gap 4 with a height *e* of 0.5-1mm disposed between the top of the first step 21 and the bottom of the first extension part 31 provides displacement adjustment allowance for the locking structure, which absorbs flatness deviations of the wall or cumulative machining errors of the panels, thereby preventing wall panel warping due to rigid interference.

As shown in Fig.2, a thickness d of the second step is 1-2mm, which ensures that a locking base has sufficient shear-resistant cross-section, thereby reducing risk of breakage caused by stress concentration. Moreover, the height of the gap cooperates with the cushion thickness of the adhesive assembly. When the adhesive assembly is compressed to deform due to an uneven wall, the internal gap within the locking structure allows for corresponding displacement adjustment, reducing structural stress resistance and improving installation adaptability.

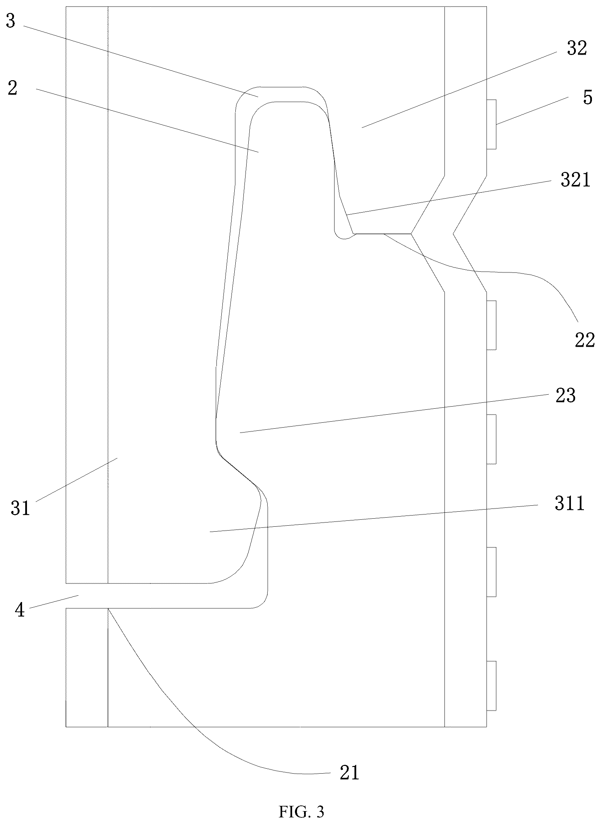

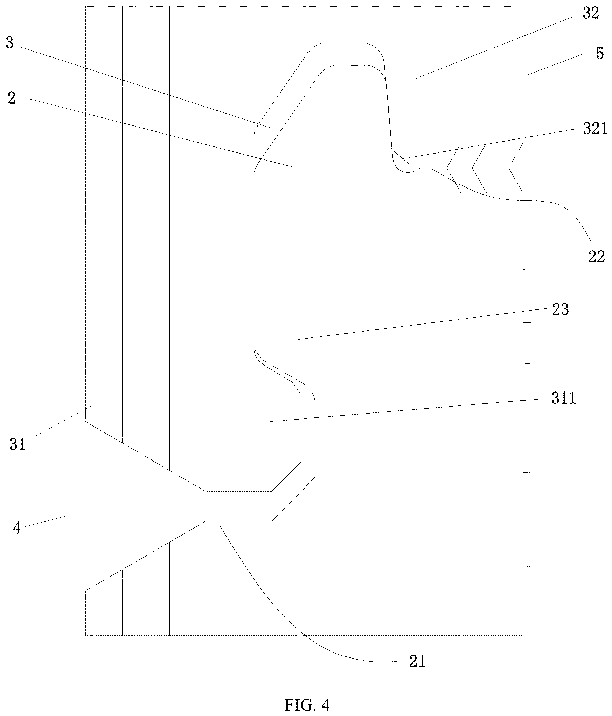

As shown in Fig.3 and Fig.4, the first extension part 31 is configured with a engaging end 311, the protrusion locking strip 2 is configured with a mating end 23 matched with the engaging end 311. Upon the engagement of the engaging end 311 and the mating end 23, the connection stability between adjacent wall panels 1 is improved.

Further, an installation method of wall panel installation structure is applied to the wall panel installation structure as mentioned above, which comprises the following steps:
S1, cleaning the wall surface 100, adhering the adhesive assembly 5 to the wall surface and/or the wall panel 1;
S2, removing all the release papers 53, attaching the wall panel 1 to the wall surface 100, pressing the adhesive assembly 5 to contact the wall surface 100;
S3, engaging adjacent wall panels 1 with each other via the locking structure to realize splicing and overall leveling.

Specifically, through the preset adhesive assembly and the locking structure, the installation method simplifies on-site procedure into wall surface cleaning, adhesive assembly presetting, release paper removal, wall panel attaching and pressing, and adjacent wall panels locking. The preset adhesive assembly reduces the process of on-site adhesive mixing and application, minimizes quality fluctuations caused by manual operation differences, and improves consistency of bonding effect under different construction conditions. The adhesive assembly provides initial adhesion upon removal of the release paper, allowing the wall panel to obtain initial positioning when pressed and attached to the wall, reducing the need for temporary fixing, in combination with the mechanical locking in subsequent locking step, shortening installation time of a single wall panel.

Specifically, during pressing, the adhesive assembly with specific thickness generates adaptive deformation to perform initial compensation for local flatness deviations of the wall surface. Subsequently, the engagement of the locking structure between adjacent wall panels constrains the relative positions of the multiple wall panels, allowing the wall panels to be coplanar during splicing. This synergistic effect effectively improves the surface flatness of large-area installation.

Moreover, such method mainly adopts dry or semi-dry operation, reducing adhesive contamination and solvent volatilization from on-site wet operations, improving the construction environment, and lowering the difficulty of finished product protection and subsequent cleaning. When a single wall panel needs partial replacement, it can be disassembled by releasing the locking and peeling off the adhesive assembly. This method poses a low risk of damage to the wall panel and the wall surface, providing certain maintainability.

### Embodiment 1

A wall panel installation structure as shown in Fig. 1, Fig. 2, Fig. 5 and Fig. 6, comprises two or more wall panels 1, wherein a locking structure is configured on the wall panel 1 and adhesive assemblies 5 disposed on a back surface of the wall panel. The locking structure comprises a protrusion locking strip 2 and a locking groove 3 engaged with the protrusion locking strip 2. The adhesive assembly 5 comprises a substrate 51, adhesive 52 disposed on two sides of the substrate 51, and release papers 53 covering outer sides of the adhesive 52. Adjacent wall panels 1 is locked with each other through the protrusion locking strip 2 and the locking groove 3, and the wall panels 1 is attached to a wall surface 100 through the adhesive assemblies 5 after removing the release papers 53. The wall panel 1 is made of rigid stone plastic composite panel.

Sides around periphery of the wall panel 1 are configured with the locking structure, and four of the adhesive assemblies 5 are arranged in parallel at intervals. The adhesive assembly 5 is arranged vertically.

A thickness of the adhesive assembly 5 is 4mm, which forms a cushion space 200 between the wall panel 1 and the wall surface 100.

The substrate 51 is made of acrylic foam, and the adhesive 52 is made of acrylate adhesive.

An initial adhesion of the adhesive assembly 5 is greater than 22N, and peel strength is greater than 35N. The adhesive assembly 5 is able to withstand a load of 2kg per square inch at 40°C for more than 72 hours, and withstand a load of 3kg per square inch at 25°C for more than 48 hours.

A thickness a of the protrusion locking strip 2 is 2.0mm, a height b of the protrusion locking strip 2 is 4.0mm, and an end of the protrusion locking strip 2 is configured with an inclined or curved surface.

The locking groove 3 comprises an opening 33 for receiving the protrusion locking strip 2, a first extension part 31 disposed at a side of the opening 33, and a second extension part 32 disposed at the other side of the opening 33, wherein an extension length of the first extension part 31 is great than that of the second extension part 32; a guide surface 321 is disposed on the second extension part 32, the protrusion locking strip 2 is configured to abut against the first extension part 31 and the second extension part 32, and then extends into the locking groove 3.

The protrusion locking strip 2 is configured with a first step 21 located on one side thereof and opposite to the first extension part 31, a second step 22 located on the other side thereof abutting the second extension part 32. A thickness c of the wall panel 1 is 5.1mm, a thickness d of the second step 22 is 1.5mm, and a gap 4 formed between a top of the first step 21 and a bottom of the first extension part 31, a height *e* of the gap 4 is 0.7mm.

An installation method of wall panel installation structure is applied to the wall panel installation structure as mentioned above, which comprises the following steps:
S1, cleaning the wall surface 100, removing the release paper 53 on one side of the adhesive assembly 5, adhering the adhesive assembly 5 to the wall panel 1;
S2, removing all the release papers 53, attaching the wall panel 1 to the wall surface 100, pressing the adhesive assembly 5 for 30 seconds to contact the wall surface 100;
S3, engaging adjacent wall panels 1 with each other via the locking structure to realize splicing and overall leveling.

### Embodiment 2

Embodiment 2 further comprises the following implementations on the basis of Embodiment 1:
As shown in Fig.7, the adhesive assembly 5 comprises a first double-sided tape 54 bonded to the wall surface 100, a first fastener 55, a second double-sided tape 56 bonded to the wall panel 1, and a second fastener 57 bonded to the second double-sided tape 56. The adhesive assembly 5 is arranged vertically. The first fastener 54 and the second fastener 57 are interengaging mushroom hook fastener. The adhesive assembly 5 comprises double-sided tape structure.

An installation method of wall panel installation structure is applied to the wall panel installation structure as mentioned above, which comprises the following steps:
S1, cleaning the wall surface 100, adhering the first double-sided tape 54 to the wall surface 100, adhering the first fastener 55 to the first double-sided tape 54, engaging the second fastener 57 to the first fastener 55, adhering one side of the second double-sided tape 56 to the wall panel 1; pressing for 30 seconds to bring the first double-sided tape 54 into contact with the wall surface 100;
S2, removing all the release papers 53, attaching the wall panel 1 to the wall surface 100, pressing the adhesive assembly 5 for 30 seconds to bring the second double-sided tape 56 into contact with the second fastener 57;
S3, engaging adjacent wall panels 1 with each other via the locking structure to realize splicing and overall leveling.

### Embodiment 3

Embodiment 3 is different from Embodiment 2 in the connection manner of the adhesive assembly 5, as detailed below:
An installation method of wall panel installation structure is applied to the wall panel installation structure as mentioned above, which comprises the following steps:
S1, cleaning the wall surface 100, adhering one side of the second double-sided tape 56 to the wall panel 1, adhering the second fastener 57 to the second double-sided tape 56, engaging the first fastener 55 to the second fastener 57, adhering the first double-sided tape 54 to the first fastener 55;
S2, removing all the release papers 53, attaching the wall panel 1 to the wall surface 100, pressing for 30 seconds to bring the adhesive assembly 5 into contact with the wall surface 100;
S3, engaging adjacent wall panels 1 with each other via the locking structure to realize splicing and overall leveling;
S4, Inserting a removal card between the first fastener 55 and the second fastener 57, prying the fastening positions up and down to temporarily detach the wall panel 1 from the wall surface 100; pressing the first fastener 55 for 30 seconds to fix the first double-sided tape 54 to the wall surface 100 so as to enhance the adhesion between the first double-sided tape 54 and the wall surface; pressing the first fastener 55 and the second fastener 57 for fastening during reinstalling the wall panel 1.

### Embodiment 4

Embodiment 4 is different from Embodiment 2 in the connection manner of the adhesive assembly 5, as detailed below:
An installation method of wall panel installation structure is applied to the wall panel installation structure as mentioned above, which comprises the following steps:
S1, cleaning the wall surface 100, adhering one side of the second double-sided tape 56 to the wall panel 1; adhering the second fastener 57 to the second double-sided tape 56, adhering one side of the first double-sided tape 54 to the wall surface 100 and then adhering the first fastener 55 to the other side of first double-sided tape 54, pressing for 30 seconds to bring the first double-sided tape 54 into contact with the wall surface 100;
S2, removing all the release papers 53, attaching the wall panel 1 to the wall surface 100, pressing the for 30 seconds to bring the first fastener 55 into contact with the second fastener 57;
S3, engaging adjacent wall panels 1 with each other via the locking structure to realize splicing and overall leveling.

### Embodiment 5

Embodiment 5 is different from Embodiment 1 in the parameters of the adhesive assembly 5 and the locking structure, as detailed below:
The thickness of the adhesive assembly 5 is 2mm.

The substrate 51 is made of EVA foam, and the adhesive 52 is made of acrylate adhesive.

The thickness a of the protrusion locking strip 2 is 2.2mm, the height b of the protrusion locking strip 2 is 4.2mm.

The thickness c of the wall panel 1 is 3.8mm, the thickness d of the second step 22 is 1.8mm, and the height *e* of the gap 4 is 0.8mm.

### Embodiment 6

Embodiment 6 is different from Embodiment 1 in the parameters of the adhesive assembly 5 and the locking structure, as detailed below:
The thickness of the adhesive assembly 5 is 4mm.

The substrate 51 is made of polyester, and the adhesive 52 is made of rubber-based adhesive.

The thickness *a* of the protrusion locking strip 2 is 1.8mm, the height *b* of the protrusion locking strip 2 is 3.7mm, and an end of the protrusion locking strip 2 is configured with an inclined surface.

The thickness c of the wall panel 1 is 5.5mm, the thickness d of the second step 22 is 1.3mm, and the height *e* of the gap 4 is 0.6mm.

### Comparative Example 1

The difference between Comparative Example 1 and Embodiment 1 is that the wall panel 1 is a regular flat panel, and adjacent wall panels are spliced by sealing and bonding with adhesive 53.

The present invention provides a wall panel structure and installation method, so as to solve the problem of complex installation procedures, reliance on wall flatness, insufficient cushioning capacity, and inadequate waterproof sealing in conventional wall panels. The adhesive assembly is suitable for latex paint, ceramic tile, glass, metal, and wood surfaces. Its applicable temperature ranges from -20°C to 40°C, which is able to withstand a high temperature of 70°C for 5-8 hours. A load-bearing test is conducted under a humid environment of 40°C and 90% relative humidity, and no detachment occurs after 30 days of loading. The size of the single wall panel is length of 150mm, width of 60mm, thickness c of 5.1mm. The adhesive assembly 5 comprises double-sided tape structure. For each wall panel, two sets of double-sided tapes are arranged symmetrically about the central axis of the wall panel.

In Embodiment 1:
The size of each set of double-sided tape is 54*16mm, and a pair of double-sided tapes bear a load of 0.63kg.

The size of each set of double-sided tape is 94*12mm, and a pair of double-sided tapes bear a load of 1.4kg.

The size of each set of double-sided tape is 70*19mm, and a pair of double-sided tapes bear a load of 1.4kg.

The size of each set of double-sided tape is 94*19mm, and a pair of double-sided tapes bear a load of 1.9kg.

The size of each set of double-sided tape is 112*22mm, and a pair of double-sided tapes bear a load of 2.3kg.

In Embodiment 2:
The size of each set of double-sided tape is 54*16mm, and a pair of double-sided tapes bear a load of 0.68kg.

The size of each set of double-sided tape is 94*12mm, and a pair of double-sided tapes bear a load of 1.48kg.

The size of each set of double-sided tape is 70*19mm, and a pair of double-sided tapes bear a load of 1.45kg.

The size of each set of double-sided tape is 94*19mm, and a pair of double-sided tapes bear a load of 2.0kg.

The size of each set of double-sided tape is 112*22mm, and a pair of double-sided tapes bear a load of 2.46kg.

In Comparative Example 1:
The size of each set of double-sided tape is 54*16mm, and a pair of double-sided tapes bear a load of 0.52kg.

The size of each set of double-sided tape is 94* 12mm, and a pair of double-sided tapes bear a load of 1.12kg.

The size of each set of double-sided tape is 70* 19mm, and a pair of double-sided tapes bear a load of 1.08kg.

The size of each set of double-sided tape is 94* 19mm, and a pair of double-sided tapes bear a load of 1.51kg.

The size of each set of double-sided tape is 112*22mm, and a pair of double-sided tapes bear a load of 1.83kg.

Specifically, the present invention conducts an initial adhesion test with reference to GB/T 4852-2002;a peel strength test with reference to GB/T 2792-2014;and a shear adhesion test according to GB/T 4851-2014,wherein the load-bearing time is measured under conditions of 40°C, 2 kg per square inch and 25 °C, 3 kg per square inch, respectively.

**Table 1 shows the performance testing of Embodiment 1-6 and Comparative Example 1**

| Test Item | Initial Adhesion/N | Peel Strength/N | Load-bearing Time under 40°C, 2 kg per square inch | Load-bearing Time under 25°C, 3 kg per square inch |
|---|---|---|---|---|
| Embodiment 1 | 24.5 | 38.2 | 78 | 52 |
| Embodiment 2 | 25.1 | 41.5 | 85 | 58 |
| Embodiment 3 | 25.3 | 42.1 | 87 | 60 |
| Embodiment 4 | 25.0 | 41.8 | 86 | 59 |
| Embodiment 5 | 24.2 | 37.1 | 76 | 50 |
| Embodiment 6 | 27.2 | 43.6 | 75 | 50 |
| Comparative Example 1 | 21.5 | 32.8 | 45 | 38 |

As shown in Table 1, compared with other adhesives of the same thickness, the rubber-based adhesive used in Embodiment 6 exhibits a significant advantage in initial adhesion and is suitable for applications requiring rapid positioning. The acrylate adhesives in the other embodiments show superior heat resistance and shear adhesion, which is suitable for long-term load-bearing requirements. The substrate used in Embodiment 5 has a slightly lower elastic modulus, and the peel strength and shear adhesion performance are slightly decreased compared with Embodiment 1 when the overall thickness is reduced.

The load-bearing comparison between Embodiment 2 and Embodiment 1, as well as the fact that the peel strength and shear adhesion of Embodiments 2 to 4 are superior to those of Embodiment 1, indicate that the composite connection of adhesive bonding and mechanical interlocking can improve interface reliability.

The data of Comparative Example 1 show that, without the engagement of protruding locking strips and locking grooves to reduce moisture penetration, the peel strength and shear adhesion decrease significantly when relying only on adhesive bonding, compared with the load-bearing capacity of Embodiment 1.

The optimized installation process of Embodiment 3 achieves more sufficient bonding of the adhesive interface, resulting in slightly better performance than Embodiment 2. Embodiment 4 optimizes the installation sequence, which improves construction convenience, and exhibits slightly better performance than Embodiment 2. In addition, Embodiment 3 solves the technical problem that the adhesive cannot be directly pressed under the shielding of large-size wall panels, thereby ensuring sufficient bonding between the double-sided tape and the wall surface. Therefore, the performance of Embodiment 3 is slightly better than that of Embodiment 4.

The above is merely to further illustrate the technical content of the present invention through embodiments for easier understanding by readers, but it does not mean that the implementation modes of the present invention are limited thereto. Any technical extension or recreation made in accordance with the present invention shall be protected by the present invention. The scope of protection of the present invention shall be subject to the claims.

## Claims

1. A wall panel installation structure, comprising two or more wall panels (1), wherein a locking structure is configured on the wall panel (1) and an adhesive assembly (5) is disposed on a back surface of the wall panel (1);
the locking structure comprises a protrusion locking strip (2) and a locking groove (3) engaged with the protrusion locking strip (2);
the adhesive assembly (5) comprises a substrate (51), adhesive (52) disposed on two sides of the substrate (51), and release papers (53) covering outer sides of the adhesive (52);
wherein adjacent wall panels (1) are locked with each other through the protrusion locking strip (2) and the locking groove (3), and the wall panels (1) are attached to a wall surface (100) through the adhesive assembly (5) after removing the release papers (53).

2. The wall panel installation structure according to claim 1, wherein sides around periphery of the wall panel (1) are configured with the locking structure, and at least two of the adhesive assemblies (5) are arranged in parallel.

3. The wall panel installation structure according to claim 1, wherein a thickness of the adhesive assembly (5) is 0.5-4mm, which forms a cushion space (200) between the wall panel (1) and the wall surface (100).

4. The wall panel installation structure according to claim 1, wherein the substrate (51) comprises any one of polyester, polyvinyl chloride, polypropylene, polyethylene, polyurethane, acrylic foam, polyethylene foam, and EVA foam, and the adhesive (52) comprises any one of acrylate adhesive and rubber-based adhesive.

5. The wall panel installation structure according to claim 4, wherein initial adhesion of the adhesive assembly (5) is greater than 22N, and peel strength is greater than 35N, the adhesive assembly (5) is able to withstand a load of 2kg per square inch at 40°C for more than 72 hours, and withstand a load of 3kg per square inch at 25°C for more than 48 hours.

6. The wall panel installation structure according to claim 1, wherein the adhesive assembly (5) comprises a first double-sided tape (54) bonded to the wall surface (100), a first fastener (55), a second double-sided tape (56) bonded to the wall panel (1), and a second fastener (57) bonded to the second double-sided tape.

7. The wall panel installation structure according to claim 1, wherein a thickness of the protrusion locking strip (2) is 1.5-2.5mm, a height of the protrusion locking strip (2) is 3.5-4.5mm, and an end of the protrusion locking strip (2) is configured with an inclined or curved surface.

8. The wall panel installation structure according to claim 1, wherein the locking groove (3) comprises an opening (33) for receiving the protrusion locking strip (2), a first extension part (31) disposed at a side of the opening (33), and a second extension part (32) disposed at the other side of the opening (33),
wherein an extension length of the first extension part (31) is great than that of the second extension part (32); a guide surface is disposed on the second extension part (32), the protrusion locking strip (2) is configured to abut against the first extension part (31) and/or the second extension part (32), and then extend into the locking groove (3).

9. The wall panel installation structure according to claim 8, wherein the protrusion locking strip (2) is configured with a first step (21) located on one side thereof and opposite to the first extension part (31), a second step (22) located on the other side thereof abutting the second extension part (32), a thickness of the wall panel (1) is 3-8mm, a thickness of the second step (22) is 1-2mm, and a gap (4) formed between a top of the first step (21) and a bottom of the first extension part (31), a height of the gap (4) is 0.5-1mm.

10. An installation method of wall panel installation structure, wherein the installation method is applied to the wall panel installation structure according to any of claims 1-9, which comprises the following steps:
S1, cleaning the wall surface (100), adhering the adhesive assembly (5) to the wall surface (100) and/or the wall panel (1);
S2, removing all the release papers (53), attaching the wall panel (1) to the wall surface (100), pressing the adhesive assembly (5) to contact the wall surface (100);
S3, engaging adjacent wall panels (1) with each other via the locking structure to realize splicing and overall leveling.
